# EUROPÄISCHE PATENTSCHRIFT

(11) **EP 1 060 941 B1**
(45) Veröffentlichungstag und Bekanntmachung des Hinweises auf die Patenterteilung: **01.10.2003**
(21) Anmeldenummer: 00110396.9
(22) Anmeldetag: 16.05.2000
(51) Int. Cl.: B60L 3/00

(54) **Einrichtung für die Ansteuerung und Betrieb eines elektrischen Fahrzeugantriebes**
Device for controlling and operating of an electric vehicle drive
Dispositif de contrôle et de fonctionnement de la traction d'un véhicule électrique

(30) Priorität: 18.06.1999 DE 19927848
(43) Veröffentlichungstag der Anmeldung: 20.12.2000
(73) Patentinhaber: Rheinmetall Landsysteme GmbH, 24159 Kiel (DE); Magnet-Motor GmbH, 82319 Starnberg (DE)
(72) Erfinder: Dammann, Cord-Jürgen, 24214 Gettorf (DE); Drude, Wolfgang, 24768 Rendsburg (DE); Deibel, Friedrich, 82396 Pähl (DE); Scherg, Christof, 82377 Penzberg (DE); Ehrhart, Peter, Dr., 81375 München (DE)
(74) Vertreter: Dietrich, Barbara

(56) Entgegenhaltungen:
- DE-A- 19 732 764
- DE-C- 19 624 090
- US-A- 4 554 989
- US-A- 5 343 971

## Beschreibung

Die Erfindung betrifft eine Einrichtung für die Ansteuerung und Betrieb eines elektrischen Fahrzeugantriebes, nach den Merkmalen des Oberbegriffs des Patentanspruches 1.

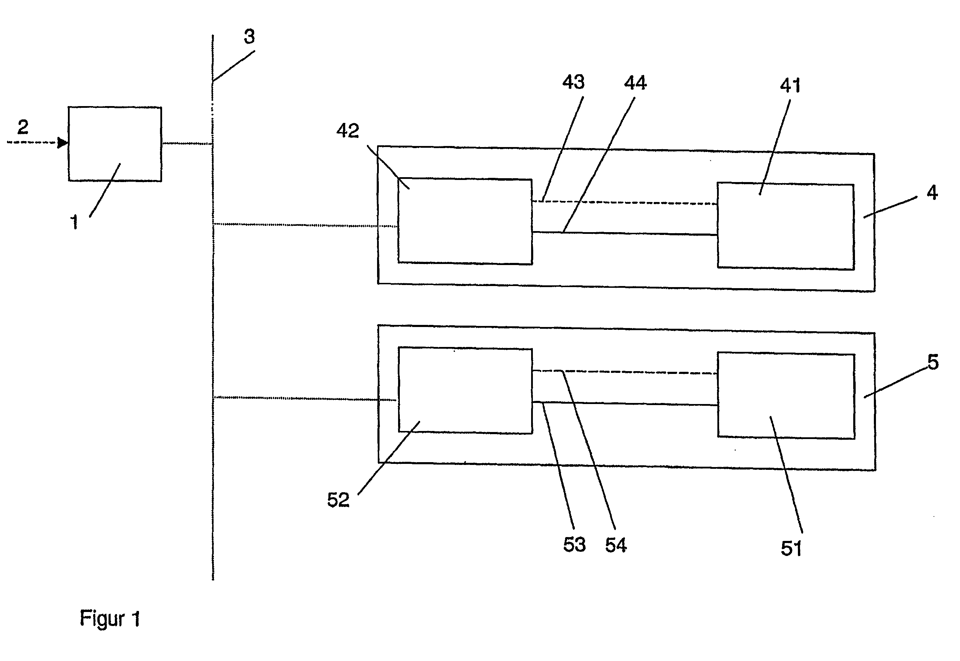

Die nationalen und europäischen Bau- und Wirkvorschriften und Richtlinien für die Zulassung von Kraftfahrzeugen erlauben bisher keine elektronischen Übertragungseinrichtungen für Lenkung und Bremse, erwähnen jedoch die Möglichkeit der erweiterten Zulassung entsprechend dem Fortschritt im Stand der Technik.
Bei einem elektrisch angetriebenen Ketten-Fahrzeug kommt hinzu, daß jeweils eine Kettenseite von einem zugeordneten Elektromotor angetrieben werden kann als sinnvolle Ausgestaltung und daß dann der Vortrieb, die Betriebsbremsung und die Lenkung des Fahrzeugs durch die zwei E-Motore allein bewerkstelligt werden muß. Dies ist möglich, da ein E-Motor auch bremsen kann im generatorischen Betrieb und das Lenken eines Kettenfahrzeugs durch unterschiedliche Beschleunigung der beiden Kettenseiten oder auch Abbremsung erfolgt. Diese Dreifachfunktion des elektrischen Kettenantriebs ist eine Besonderheit für Kettenfahrzeuge bezüglich der amtlichen Zulassung und bedarf der besonders sicheren Ansteuerung und Überwachung in allen Betriebszuständen, da ein Ausfall einer Kettenseite eine erhebliche Gefährdung bewirken und eine unmittelbare Drehung des Fahrzeugs zu einer Seite auslösen kann.
In der DE 19732764 wird die ausfallsichere elektronische Sensierung und Ansteuerung von Lenkung und Bremse durch eine entsprechende Ansteuerung der Leistungselektroniken und ein Bussystem behandelt, die im Zusammenhang für ein Kettenfahrzeug ebenfalls benötigt wird.
Weiterhin sind einfache Ansteuersysteme für elektrische Kettenantriebe bekannt (siehe Figur 1), die ausgehend von einer Steuereinrichtung (1), die die Bediensignale für Fahren, Bremsen, Lenken (2) erhält und über eine Busleitung (3) an die Kettenantriebe links und rechts (4, 5) geeignet weitergibt, die Antriebsmotore (41, 51) über zugeordnete Leistungseinheiten (42, 52) und Steuer- und Versorgungsleitungen (43, 44, 53, 54) für den gewünschten Fahrzustand Fahren, Bremsen, Lenken ansteuert und versorgt. In diesem Fall ist eine Gefährdung dadurch gegeben, daß bei Ausfall z.B. eines Motors (41 oder 51) dieser Ausfall durch die Steuereinheiten (42 oder 52) und die Steuerung 1 sehr schnell festgestellt werden muß, damit der andere Motor möglichst schnell von der Steuerung (1) ebenfalls abgeschaltet bzw. im Betriebszustand verändert wird, damit keine ungleichmäßige z.B. Antriebsleistung auf die Kettenseiten gebracht wird und ein plötzliches Drehen des Fahrzeugs vermieden wird. Hierbei ist erkennbar, daß bereits ein einfacher Fehlerfall zu erheblichen Problemen und dem gesamten Ausfall des Antriebs führen kann.

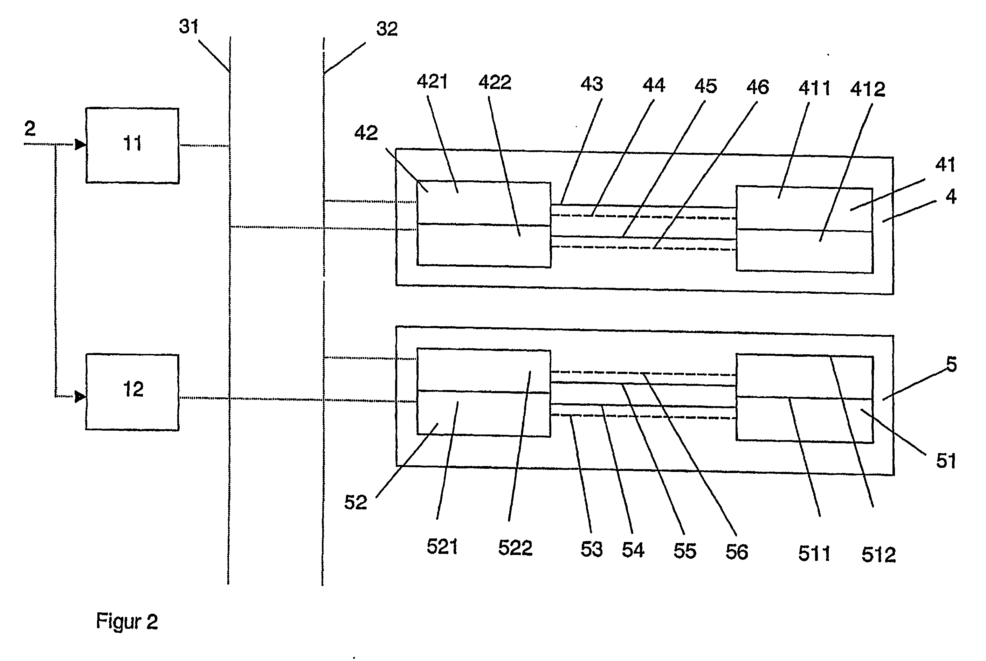

Als weitere Entwicklungsstufe sind redundante Steuerungssysteme bekannt und zweikreisige E-Motore (siehe Figur 2), die ausgehend von Steuereinrichtungen (11, 12), die die Bediensignale für Fahren, Bremsen, Lenken (2) erhalten und über Busleitungen (31, 32) an die Kettenantriebe links und rechts (4, 5) geeignet weitergeben, die Antriebsmotore (41, 51) über zugeordnete Leistungseinheiten (42, 52) und Steuer- und Versorgungsleitungen (43, 44, 45, 46, 53, 54, 55, 56) für den gewünschten Fahrzustand Fahren, Bremsen, Lenken ansteuern, wobei als Besonderheit die Motore auf jeder Seite in jeweils zwei Teilmotore (411, 412 bzw. 511, 512) aufgeteilt und die zugehörigen Leistungseinheiten ebenfalls aufgeteilt sind in zugeordnete Teileinheiten (421, 422 bzw. 521, 522). In einem einfachen Fehlerfall z.B. Ausfall des Motorteils (411) ist es jetzt möglich, auch den entsprechenden Motorteil der anderen Kettenseite (511) kurzfristig abzuschalten, wobei dann die Fahrfähigkeit des Fahrzeugs erhalten werden kann bei gewissen Leistungseinschränkungen, da jeweils ein Teilmotor abgeschaltet ist. Die redundante Auslegung ist so vorgenommen über alle Komponenten, daß ein einfacher Fehlerfall an jeder Stelle nicht zu einer Gefährdung oder Gesamtausfall des Antriebs führt. Auch bei diesem Fehlerfall muß die Sensierung über die Steuerungen (11, 12) erfolgen und die Abschaltreaktion für das entsprechende andere Teil auf der anderen Kettenseite zeitkritisch ausgelöst werden.

US-A-4,554,989 offenbart eine Einrichtung mit den Merkmalen des Oberbegriffs des Anspruchs 1.

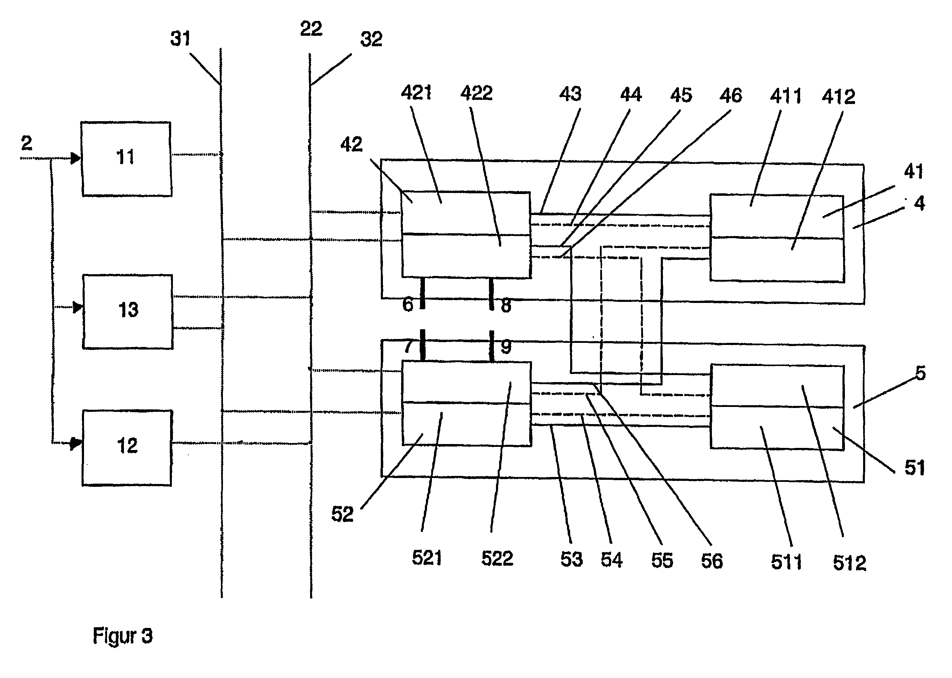

Aufgabe der Erfindung ist die sichere und schnelle Abschaltung oder Teilabschaltung und Beeinflussung der symmetrischen Komponente einer Kettenseite des Antriebs bei Ausfall einer Komponente auf der anderen Kettenseite (siehe Figur 3).

Die erfindungsgemäße Lösung ist im unabhängigen Anspruch 1 definiert. Bevorzugte Ausgestaltungen sind den abhängigen Ansprüchen zu entnehmen.

Zur Vermeidung von weitgehenden und zeitkritischen Überwachungen und Steuerungen auf verschieden ausbildbaren Überwachungsebenen wird vorgeschlagen, die Antriebsseiten mit ihren Leistungseinheiten und Teilmotoren so gegenseitig zu verschalten, daß eine sofortige Überwachung und Abschaltung von der einen zur anderen Seite und umgekehrt gegeben ist.
Dazu werden die Leistungseinheiten (42, 52, siehe Figur 3) zur Ansteuerung der Teilmotore in jeweils zwei Teileinheiten (421, 422 und 521, 522) aufgeteilt und die Antriebsmotore (41, 51) entsprechend in ebenfalls zwei Teilmotore (411, 412 und 511, 512) aufgeteilt. Eine Leistungseinheit wird mit einer Teileinheit (422) mit dem gegenüberliegenden Teilmotor (512) zur Ansteuerung verbunden. Die andere Teileinheit (421) der Leistungseinheit wird mit dem entsprechenden Teilmotor (411) auf der gleichen Seite wie die Leistungseinheit verbunden. Entsprechend wird die Leistungseinheit der anderen Seite mit den Teilmotoren links und rechts verbunden.
Damit wird mit jeder Leistungseinheit je zur Hälfte jeweils der linke und der rechte Antriebsmotor mit jeweils einem Teilmotor angesteuert. Im Fehlerfall z.B. Ausfall der Leistungsteileinheit (521) fällt auch der Teilmotor (511) aus und die benachbarte Leistungsteileinheit (522) wird unverzüglich ebenfalls abgeschaltet oder nachgeregelt und mit ihr der zugeordnete Teilmotor (412) auf der anderen Seite, so daß das Fahrzeug weiter geradeaus fahren kann bei eventuell verminderter Geschwindigkeit. Da diese Überwachung und Schaltung in den direkt benachbarten Leistungsteileinheiten vorgenommen wird, ist eine schnellstmögliche Reaktion bei Ausfall eines Teiles in den Antriebsseiten möglich. Dabei kann die Aufteilung des Antriebsmotors und der zugeordneten Leistungseinheit auch weiter erhöht werden und anders ausgestaltet werden, z.B. durch Aufteilung auf jeweils 3 Motormodule und dann 3 zugeordnete Leistungsteileinheiten. Zur Aufrechterhaltung einer entsprechend hohen Verfügbarkeit der Leistungseinheiten werden diese aus getrennten Stromversorgungen (6, 7) bezüglich der Steuerung versorgt. Ebenso werden die Leistungseinheiten bezüglich der Stromversorgung für die anzusteuernden Fahrmotore aus jeweils getrennten Generatorstromkreisen (8, 9) versorgt. Dabei können auch mehr als ein Generator an einem oder mehreren Dieselmotoren für die Einspeisung der Fahrstromkreise verwendet werden.

Auch bei Radfahrzeugen in bekannter oder in spezieller Ausführung, zum Beispiel bei Radseitenlenkung, kann diese Anordnung wirkungsvoll angewendet werden. Obwohl bei Radfahrzeugen fallweise geringere Anforderungen an die Sicherheit eines Elektroantriebes gestellt werden, da die Lenkung und Bremse in der Regel als separate mechanische Systeme vorhanden sind, ist ein Einsatz der erfindungsgemäßen Einrichtung vorteilhaft möglich, um jedwede Störung im Fahrbetrieb bei Ausfall einer elektrischen Antriebskomponente zu vermeiden. Dies gilt insbesondere für militärische Fahrzeuge, bei denen es nicht akzeptiert wird, daß ein Fahrzeug allein zum Beispiel durch Bruch eines Kabels komplett ausfällt.

Vorteilhaft bei der erfindungsgemäßen Lösung ist die hohe Sicherheit im Fahrbetrieb, die die unvorhersehbare Fehlreaktion eines Fahrzeuges bei Ausfall einer elektrischen Antriebskomponente vermeidet oder auf ein unkritisches Mindestmaß durch Verminderung der Antriebsleistung herabsetzt und so den Fahrer in die Lage versetzt, das Fahrzeug weiter sicher zu beherrschen. Damit ist es möglich, die hohen Anforderungen an die Sicherheit im öffentlichen Straßenverkehr zu erfüllen und die Zulassung eines elektrischen Kettenfahrzeugs zu erreichen.

Die Erfindung wird anhand der Figuren näher erläutert.
Es zeigen:
- Figur 1:: ein Prinzipbild des elektrischen Antriebes eines Kettenfahrzeuges
- Figur 2:: ein Prinzipbild eines redundanten elektrischen Antriebes eines Kettenfahrzeuges
- Figur 3:: eine erfindungsgemäße Anordnung des elektrischen Antriebes

Figur 1 verdeutlicht einen elektrischen Antrieb für ein Kettenfahrzeug mit einer Steuereinrichtung (1), die die Bediensignale für Fahren, Bremsen, Lenken (2) erhält und über eine Busleitung (3) an die Kettenantriebe links und rechts (4, 5) geeignet weitergibt und die Antriebsmotore (41, 51) über zugeordnete Leistungseinheiten (42, 52) und Steuer- und Versorgungsleitungen (43, 44, 53, 54) für den gewünschten Fahrzustand Fahren, Bremsen, Lenken ansteuert.

In der Figur 2 wird der elektrische Antrieb für ein Kettenfahrzeug mit einer redundanten Ausgestaltung bzw. Aufteilung der seitenzugeordneten Antriebskomponenten mit Steuereinrichtungen (11, 12) dargestellt, die die Bediensignale für Fahren, Bremsen, Lenken (2) erhalten und über Busleitungen (31, 32) an die Kettenantriebe links und rechts (4, 5) geeignet weitergeben und die Antriebsmotore (41, 51) über zugeordnete Leistungseinheiten (42, 52) und Steuer- und Versorgungsleitungen (43, 44, 45, 46, 53, 54, 55, 56) für den gewünschten Fahrzustand Fahren, Bremsen, Lenken ansteuern, wobei als Besonderheit die Motore auf jeder Seite in jeweils zwei Teilmotore (411, 412 bzw. 511, 512) aufgeteilt und die zugehörigen Leistungseinheiten ebenfalls aufgeteilt sind in zugeordnete Teileinheiten (421, 422 bzw. 521, 522).

Die Figur 3 zeigt die erfindungsgemäße Ausgestaltung eines elektrischen Antriebs für ein Kettenfahrzeug mit bekannten Steuereinrichtungen (11, 12, 13), die von Bediensignalen (2) angesteuert werden, und Signalbusleitungen (31, 32) und Leistungseinheiten (42, 52), die zur Ansteuerung der Teilmotore in jeweils zwei Teileinheiten (421, 422 und 521, 522) aufgeteilt werden, und Antriebsmotore (41, 51), die entsprechend in ebenfalls jeweils zwei Teilmotore (411, 412 und 511, 512) aufgeteilt werden. Eine Leistungseinheit wird mit einer Teileinheit (422) mit dem gegenüberliegenden Teilmotor (512) zur Ansteuerung verbunden. Die andere Teileinheit (421) der Leistungseinheit wird mit dem entsprechenden Teilmotor (411) auf der gleichen Seite wie die Leistungseinheit verbunden. Entsprechend wird die Leistungseinheit der anderen Seite mit den Teilmotoren links und rechts verbunden.
Damit wird mit jeder Leistungseinheit je zur Hälfte jeweils der linke und der rechte Antriebsmotor mit jeweils einem Teilmotor angesteuert. Die Leistungseinheiten werden jeweils aus getrennten Batterien (6, 7) für die Steuerung versorgt. Ebenfalls werden die Leistungseinheiten aus getrennten Generatorkreisen (8, 9) mit Strom für die Antriebsmotore versorgt.

## Patentansprüche

1. Einrichtung für die Ansteuerung und Betrieb eines elektrischen Fahrzeugantriebs, insbesondere für Kettenfahrzeuge, bestehend aus einer Stromerzeugereinrichtung im Fahrzeug und aus elektrischen Antriebsmotoren (41, 51) für die Kettenantriebe oder die Laufräder sowie aus Einrichtungen für die Erfassung der Bediensignale vom Fahrer zum Fahren, Bremsen und Lenken (2) und aus einer elektronischen Signalverarbeitung für die Verarbeitung und Weiterleitung der Bediensignale und ihre Einwirkung auf Leistungselektroniken (42, 52), die die Fahrmotore ansteuern, und bestehend aus mindestens je einem Antriebsmotor (41, 51) für die linke und rechte Kettenseite und diesen Motoren zugeordneten Leistungseinheiten (42, 52) wobei die Leistungseinheiten (42, 52) jeweils in wenigstens zwei Teileinheiten (421, 422, 521, 522) aufgeteilt sind und die Antriebsmotore (41, 51) jeweils ebenfalls in wenigstens zwei Teilmotore oder -module (411, 412, 511, 512) aufgeteilt sind **dadurch gekennzeichnet daß** eine Teileinheit (422) der linken Leistungseinheit (42) einen Teilmotor (512) des rechten Antriebsmotors (51) ansteuert und die andere Teileinheit (421) der linken Leistungseinheit (42) einen Teilmotor (411) des linken Antriebsmotors (41) ansteuert und wiederum eine Teileinheit (522) der rechten Leistungseinheit (52) einen Teilmotor (412) des linken Antriebsmotors (41) und die andere Teileinheit (521) der rechten Leistungseinheit (52) einen Teilmotor (511) des rechten Antriebsmotors-(51) ansteuert, womit die Teileinheiten (411, 412, 511, 512) der Leistungseinheiten (42,52) und die Teilmotore (411, 412, 511, 512)der Antriebsmotore (41, 51) jeweils passend über Kreuz so verbunden sind, daß in jeder Leistungseinheit (42, 52) mittels Teileinheiten jeweils wenigstens ein Teilmodul jedes vorhandenen Antriebsmotors angesteuert werden.

2. Einrichtung nach Anspruch 1, **dadurch gekennzeichnet, daß** die Teileinheiten (421, 422, 521, 522) der jeweiligen Leistungseinheit (42, 52) untereinander verknüpft sind und eine Abschaltung oder Leistungsverminderung einer Teileinheit zu einer entsprechenden Abschaltung oder Leistungsminderung der jeweils gegenüberliegenden anderen Teileinheit der gleichen Leistungseinheit führt.

3. Einrichtung nach Anspruch 1, **dadurch gekennzeichnet, daß** jeweils ein Teilmotor (411) des linken Antriebsmotors (41) einem entsprechend gleichartigen Teilmotor (512) des rechten Antriebsmotors (51) entspricht und die Antriebsmotore jeweils mehrere Teilmotore oder -module aufweisen.

4. Einrichtung nach Anspruch 1, **dadurch gekennzeichnet, daß** die Anzahl und Aufteilung der Leistungseinheiten (42, 52) in Teileinheiten der Anzahl und Aufteilung der Antriebsmotore /41, 51) in Teilmotore so entspricht, daß bei Ausfall einer Teileinheit oder eines Teilmotors einer Antriebsseite die betreffende benachbarte Teileinheit der gleichen Leistungseinheit diesen Ausfall feststellt und einen Teilmotor der anderen Antriebsseite ebenfalls abschaltet, leistungsmindert oder nachregelt.

5. Einrichtung nach Anspruch 1, **dadurch gekennzeichnet, daß** bei zwei Teileinheiten je Leistungseinheit (42, 52) und zwei Leistungseinheiten und bei zwei Teilmotoren je Antriebsmotor (41, 51) und zwei Antriebsmotoren jede Leistungseinheit mit ihren Teileinheiten einen Teilmotor des linken und des rechten Antriebsmotors ansteuert.

6. Einrichtung nach Anspruch 1, **dadurch gekennzeichnet, daß** bei zwei Teileinheiten je Leistungseinheit und drei Leistungseinheiten und bei drei Teilmotoren je Antriebsmotor und zwei Antriebsmotoren ebenfalls jede Leistungseinheit mit ihren Teileinheiten einen Teilmotor des linken und des rechten Antriebsmotors ansteuert und eine weitere Aufteilung mit Zweifachleistungseinheiten und zugeordneten mehrfach aufgeteilten zwei oder mehr Antriebsmotoren möglich ist.

7. Einrichtung nach einem der Ansprüche 1 - 6, **dadurch gekennzeichnet, daß** die Leistungseinheiten (42, 52) bezüglich ihrer Signalverarbeitung von getrennten Batterien (6, 7) spannungversorgt werden, so daß ein Ausfall einer Batterieversorgung jeweils nur den Ausfall einer Leistungseinheit (42, 52) verursacht.

8. Einrichtung nach einem der Ansprüche 1 - 6, **dadurch gekennzeichnet, daß** der für den Fahrantrieb stromerzeugende Generator im Fahrzeug mindestens zwei getrennte Stromkreise (8, 9) versorgt, an die die Leistungseinheiten (42, 52) für die Fahrmotore (41, 51) angeschlossen sind.

## Claims

1. Device to control and operate an electrical vehicle drive, particularly for track-laying vehicles, consisting of a current generation device in the vehicle and electrical drive motors (41, 51) for the chain drives or running wheels, and devices to capture the operating signals from the driver about traction, braking and steering (2) and electronic signal processing for processing and passing on the operating signals, and their effect on power electronics (42, 52) which control the traction motors, and consisting of at least one drive motor (41, 51) each for the left-hand and right-hand chain side, and power units (42, 52) which are assigned to these motors, the power units (42, 52) each being divided into at least two sub-units (421, 422, 521, 522), and the drive motors (41, 51) likewise each being divided into at least two sub-motors or sub-modules (411, 412, 511, 512), **characterized in that** one sub-unit (422) of the left-hand power unit (42) controls one sub-motor (512) of the right-hand drive motor (51), and the other sub-unit (421) of the left-hand power unit (42) controls one sub-motor (411) of the left-hand drive motor (41), and again one sub-unit (522) of the right-hand power unit (52) controls one sub-motor (412) of the left-hand drive motor (41), and the other sub-unit (521) of the right-hand power unit (52) controls one sub-motor (511) of the right-hand drive motor (51), the sub-units (411, 412, 511, 512) of the power units (42, 52) and the sub-motors (411, 412, 511, 512) of the drive motors (41, 51) each being suitably connected crosswise, in such a way that in each power unit (42, 52) at least one sub-module of each existing drive motor is controlled by means of sub-units.

2. Device according to Claim 1, **characterized in that** the sub-units (421, 422, 521, 522) of each power unit (42, 52) are linked to each other, and switching off or reducing power to one sub-unit results in correspondingly switching off or reducing power to the opposite other sub-unit of the same power unit in each case.

3. Device according to Claim 1, **characterized in that** each sub-motor (411) of the left-hand drive motor (41) corresponds to a correspondingly similar sub-motor (512) of the right-hand drive motor (51), and each drive motor has multiple sub-motors or sub-modules.

4. Device according to Claim 1, **characterized in that** the number and division of the power units (42, 52) into sub-units corresponds to the number and division of the drive motors (41, 51) into sub-motors, in such a way that if one sub-unit or one sub-motor of one drive side fails, the relevant adjacent sub-unit of the same power unit discovers this failure and likewise switches off, reduces power to or re-adjusts one sub-motor of the other drive side.

5. Device according to Claim 1, **characterized in that** with two sub-units per power unit (42, 52) and two power units, and with two sub-motors per drive motor (41, 51) and two drive motors, each power unit with its sub-units controls one sub-motor of the left-hand and right-hand drive motor.

6. Device according to Claim 1, **characterized in that** with two sub-units per power unit and three power units, and with three sub-motors per drive motor and two drive motors, likewise each power unit with its sub-units controls one sub-motor of the left-hand and right-hand drive motor, and a further division with double power units and assigned multiply divided two or more drive motors is possible.

7. Device according to one of Claims 1 - 6, **characterized in that** the power units (42, 52) are supplied with voltage with regard to their signal processing from separate batteries (6, 7), so that a failure of one battery supply in each case causes only the failure of one power unit (42, 52).

8. Device according to one of Claims 1 - 6, **characterized in that** the generator which generates current for the traction drive supplies at least two separate circuits (8, 9), to which the power units (42, 52) for the traction motors (41, 51) are connected, in the vehicle.

## Revendications

1. Appareil pour la commande et le fonctionnement d'un entraînement électrique de véhicule automobile, en particulier pour des véhicules chenillés, comprenant un dispositif de production de courant dans le véhicule et des moteurs d'entraînement (41, 51) électriques pour les entraînements de chenilles ou les roues mobiles ainsi que des appareils pour la détection des signaux de commande provenant du conducteur pour la conduite, le freinage et la direction (2) et un dispositif électronique de traitement de signal pour le traitement et l'acheminement des signaux de commande et leur effet sur des électroniques de puissance (42, 52), qui commandent les moteurs de translation, et comprenant au moins chacun un moteur d'entraînement (41, 51) pour les côtés gauche et droit de la chenille et des unités de puissance (42, 52) attribuées à ces moteurs, les unités de puissance (42, 52) étant subdivisées chacune en au moins deux unités partielles (421, 422, 521, 522) et les moteurs d'entraînement (41, 51) étant répartis respectivement également en au moins deux moteurs partiels ou modules partiels (411, 412, 511, 512) **caractérisé en ce qu'**une unité partielle (422) de l'unité de puissance (42) gauche commande un moteur partiel (512) du moteur d'entraînement (51) droit et l'autre l'unité partielle (421) de l'unité de puissance (42) gauche commande un moteur partiel (411) du moteur d'entraînement (41) gauche et à nouveau une unité partielle (522) de l'unité de puissance (52) droite commande un moteur partiel (412) du moteur d'entraînement (41) gauche et l'autre unité partielle (521) de l'unité de puissance (52) droite un moteur partiel (511) du moteur d'entraînement (51) droit, moyennant quoi les unités partielles (411, 412, 511, 512) des unités de puissance (42, 52) et les moteurs partiels (411, 412, 511, 512) des moteurs d'entraînement (41, 51) sont reliés respectivement en croix de façon adaptée de telle sorte que, à chaque fois au moins un module partiel de chaque moteur d'entraînement présent est commandé dans chaque unité de puissance (42, 52) au moyen d'unités partielles.

2. Dispositif selon la revendication 1, **caractérisé en ce que** les unités partielles (421, 422, 521, 522) de l'unité de puissance respective (42, 52) sont liées entre elles et une déconnexion ou une réduction de puissance d'une unité partielle entraîne une déconnexion correspondante ou une réduction de puissance correspondante de l'autre unité partielle respectivement opposée de la même unité de puissance.

3. Dispositif selon la revendication 1, **caractérisé en ce qu'**un moteur partiel (411) du moteur d'entraînement (41) gauche correspond respectivement à un moteur partiel (512) du même type du moteur d'entraînement (51) droit et les moteurs d'entraînement présentent respectivement plusieurs moteurs partiels ou modules partiels.

4. Dispositif selon la revendication 1, **caractérisé en ce que** le nombre et la répartition des unités de puissance (42, 52) en unités partielles correspond au nombre et à la répartition des moteurs d'entraînement (41, 51) en moteurs partiels de sorte que, en cas de défaillance d'une unité partielle ou d'un moteur partiel d'un côté d'entraînement, l'unité partielle voisine correspondante de la même unité de puissance constate cette défaillance et déconnecte, réduit en puissance ou réajuste un moteur partiel de l'autre côté d'entraînement.

5. Dispositif selon la revendication 1, **caractérisé en ce que**, avec deux unités partielles par unité de puissance (42, 52) et deux unités de puissance et avec deux moteurs partiels par moteur d'entraînement (41, 51) et deux moteurs d'entraînement, chaque unité de puissance commande avec ses unités partielles, un moteur partiel du moteur d'entraînement gauche et du moteur d'entraînement droit.

6. Dispositif selon la revendication 1, **caractérisé en ce que**, avec deux unités partielles par unité de puissance et trois unités de puissance et avec trois moteurs partiels par moteur d'entraînement et deux moteurs d'entraînement, chaque unité de puissance avec ses unités partielles commande également un moteur partiel du moteur d'entraînement gauche et du moteur d'entraînement droit et une autre répartition avec des unités de puissance doubles et deux ou plusieurs moteurs d'entraînement attribués répartis plusieurs fois est possible.

7. Dispositif selon l'une quelconque des revendications 1 à 6, **caractérisé en ce que** les unités de puissance (42, 52) sont alimentées en tension par des batteries (6, 7) séparées en ce qui concerne leur traitement de signal, de sorte qu'une défaillance d'une alimentation de batterie provoque à chaque fois seulement la défaillance d'une unité de puissance (42, 52).

8. Dispositif selon l'une quelconque des revendications 1 à 6, **caractérisé en ce que** le générateur générant du courant pour le mouvement de translation alimente, dans le véhicule, au moins deux circuits (8, 9) séparés, auxquels les unités de puissance (42, 52) pour les moteurs de translation (41, 51) sont raccordées.
